# EUROPÄISCHE PATENTSCHRIFT

(11) **EP 1 472 453 B1**
(45) Veröffentlichungstag und Bekanntmachung des Hinweises auf die Patenterteilung: **02.05.2007**
(21) Anmeldenummer: 02795041.9
(22) Anmeldetag: 23.12.2002
(51) Int. Cl.: F02M 51/06, F02M 61/16, F02M 61/08

(54) **BRENNSTOFFEINSPRITZVENTIL**
FUEL INJECTION VALVE
SOUPAPE D'INJECTION DE CARBURANT

(30) Priorität: 30.01.2002 DE 10203655
(43) Veröffentlichungstag der Anmeldung: 03.11.2004
(73) Patentinhaber: ROBERT BOSCH GMBH, 70442 Stuttgart (DE)
(72) Erfinder: STIER, Hubert, 71665 Vaihingen/Enz (DE); OKRENT, Elmar, 71686 Remseck (DE); DOEBLER, Ulrich, 71686 Remseck (DE)
(74) Vertreter: Körfer, Thomas
(86) Internationale Anmeldenummer: PCT/DE2002/004734
(87) Internationale Veröffentlichungsnummer: WO 2003/064848

(56) Entgegenhaltungen:
- EP-A- 0 477 400
- EP-A- 1 111 230
- DE-A- 19 939 133
- DE-C- 19 839 125
- US-A- 5 697 554
- US-B1- 6 213 414

## Beschreibung

### Stand der Technik

Die Erfindung geht aus von einem Brennstoffeinspritzventil nach der Gattung des Hauptanspruchs.

Aus der EP 0 477 400 A1 ist ein Wegtransformator für einen piezoelektrischen Aktor bekannt, bei der der Aktor eine Hubkraft auf einen Geberzylinder überträgt, der durch einen Zylinderträger abgeschlossen ist. In diesem Geberzylinder wird ein Nehmerkolben geführt, der den Geberzylinder ebenfalls abschließt und hierdurch die Hydraulikkammer bildet. In der Hydraulikkammer ist eine Feder angeordnet, die den Geberzylinder und den Nehmerkolben auseinander drückt. Der Nehmerkolben überträgt eine Hubbewegung mechanisch auf beispielsweise eine Ventilnadel. Wenn der Aktor auf den Geberzylinder einen Hubbewegung überträgt, wird diese Hubbewegung durch den Druck eines Hydraulikfluids in der Hydraulikkammer auf den Nehmerkolben übertragen, da das Hydraulikfluid in der Hydraulikkammer sich nicht zusammenpressen läßt und nur ein ganz geringer Anteil des Hydraulikfluids durch den Ringspalt während des kurzen Zeitraumes eines Hubes entweichen kann. In der Ruhephase, wenn der Aktor keine Druckkraft auf den Geberzylinder ausübt, wird durch die Feder der Nehmerkolben aus dem Zylinder herausgedrückt und durch den entstehenden Unterdruck dringt über den Ringspalt das Hydraulikfluid in den Hydraulikraum ein und füllt diesen wieder auf. Dadurch stellt der Wegtransformator sich automatisch auf Längenausdehnungen und druckbedingte Dehnungen eines Brennstoffeinspritzventils ein.

Nachteilig an den aus den oben genannten Druckschriften bekannten Brennstoffeinspritzventilen ist insbesondere, dass die Vorspannung einer Feder, welche die Weite des Kopplerspaltes zwischen dem Geberzylinder und dem Nehmerkolben bestimmt, mittels einer Einstellscheibe erfolgt, welche in das Gehäuse des Brennstoffeinspritzventils eingelegt wird. Die Einstellscheibe ist bedingt durch ihre geringe Dicke zum einen verschleiß- und störungsanfällig, zum anderen kann sie große Fertigungsungenauigkeiten aufweisen, welche die korrekte Einstellung des Kopplerspalts erschweren.

In US 6 213 414 B ist ein Brennstoffeinspritzventil beschrieben, welches einen Aktor zum Erzeugen einer Hebebewegung und einen Hebebewegungsumsetzer zum Übertragen der Hebebewegung des Aktuators auf eine Ventilnadel, der mit einem hydraulischen Medium gefüllt ist und in der Heberichtung deformierbar ist, aufweist. Eine Kompensationskammer für das hydraulische Medium ist mit einem Innenraum des Hebebewegungsumsetzers über eine Drosselöffnung verbunden und durch ein elastisches Gehäuse eingeschlossen. Das verbundene System des Aktuators, des Hebebewegungsumsetzers und der Ventilnadel wird durch eine Rückstellfeder vorgespannt.

### Vorteile der Erfindung

Das erfindungsgemäße Brennstoffeinspritzventil mit den kennzeichnenden Merkmalen des Hauptanspruchs hat demgegenüber den Vorteil, dass die Vorspannung der Feder mittels der Position des Düsenkörpers relativ zum Gehäuse sehr genau einstellbar ist. Das Bauteil Einstellscheibe kann somit entfallen.

Durch die in den Unteransprüchen aufgeführten Maßnahmen sind vorteilhafte Weiterbildungen und Verbesserungen des im Hauptanspruch angegebenen Brennstoffeinspritzventils möglich.

Eine erste Feder ist vorzugsweise zwischen dem Führungszylinder und einem Flansch des Nehmerkolbens eingespannt. Eine zweite Feder kann zwischen einem Flansch der Ventilnadel und dem Düsenkörper eingespannt sein. Dadurch ergibt sich eine besonders kompakte Bauweise des Brennstoffeinspritzventils.

Vorteilhafterweise ist der Düsenkörper mit dem Gehäuse zur Fixierung in geeigneter Weise beispielsweise durch Schweißen verbunden.

Weiterhin ist von Vorteil, daß die einfache Konstruktion des erfindungsgemäßen Brennstoffeinspritzventils die Verwendung von Brennstoff als Hydraulikfluid erlaubt, wodurch aufwendige Abdichtungsmaßnahmen entfallen können.

### Zeichnung

Ein Ausführungsbeispiel der Erfindung ist in der Zeichnung vereinfacht dargestellt und in der nachfolgenden Beschreibung näher erläutert. Es zeigt:

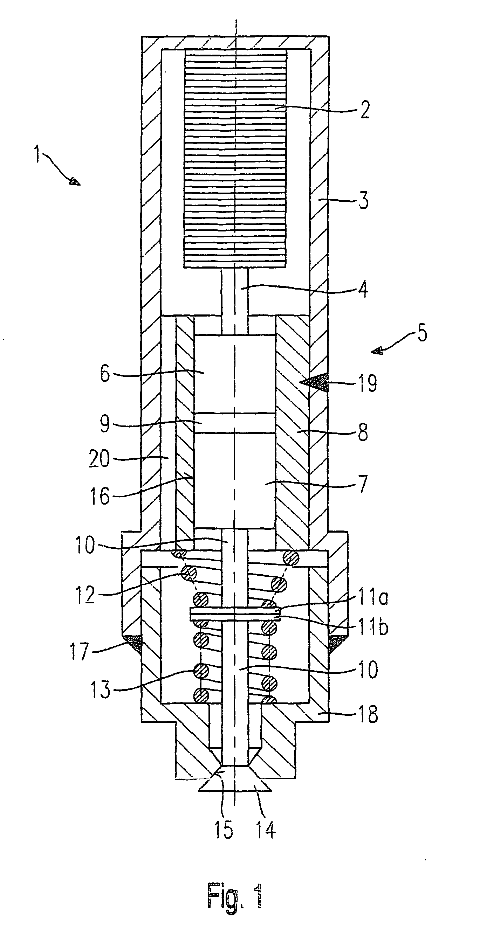

- Fig. 1: einen stark schematisierten Schnitt durch ein Ausführungsbeispiel eines erfindungsgemäßen Brennstoffeinspritzventils.

### Beschreibung des Ausführungsbeispiels

Fig. 1 zeigt in einer stark schematisierten Ansicht einen Schnitt durch ein Ausführungsbeispiel eines erfindungsgemäß ausgestalteten Brennstoffeinspritzventils 1. Das Brennstoffeinspritzventil 1 ist zum direkten Einspritzen von Brennstoff in den Brennraum einer gemischverdichtenden, fremdgezündeten Brennkraftmaschine geeignet.

Das Brennstoffeinspritzventil 1 umfaßt einen piezoelektrischen oder magnetostriktiven Aktor 2, der in einem Gehäuse 3 gekapselt ist. Der Aktor 2 wirkt über ein Stellglied 4 auf einen hydraulischen Koppler 5 ein, welcher einen Geberkolben 6 und einen Nehmerkolben 7 aufweist. Der Geberkolben 6 und der Nehmerkolben 7 sind in einem Führungszylinder 8 geführt. Zwischen dem Geberkolben 6 und dem Nehmerkolben 7 ist ein Kopplerspalt 9 ausgebildet. Der Führungszylinder 8 ist mittels einer Schweißnaht 19 mit dem Gehäuse 3 verschweißt. Der Brennstoff wird in einem Brennstoffkanal 20 an dem Führungszylinder 8 vorbei geführt.

Der hydraulische Koppler 5 kann dabei vorteilhaft zur Hubübersetzung des Aktors 2 verwendet werden, indem die Flächen des Geberkolbens 6 und des Nehmerkolbens 7 enstprechend aufeinander abgestimmt werden. Der Nehmerkolben 7 weist einen ersten Flansch 11a auf.

Abströmseitig des Nehmerkolbens 7 ist eine Ventilnadel 10 angeordnet, welche einen zweiten Flansch 11b aufweist. Zwischen dem ersten Flansch 11a und dem Führungszylinder 8 ist eine erste Feder 12 angeordnet, welche dafür sorgt, daß der Flansch 11a des Nehmerkolbens 7 an dem Flansch 11b der Ventilnadel 10 anliegt und der Kopplerspalt 9 eine definierte Weite erhält. Die erste Feder 12 ist dabei zwischen dem Führungszylinder 8 und dem ersten Flansch 11a eingespannt.

An der abströmseitigen Seite des zweiten Flansches 11b ist eine zweite Feder 13 angeordnet, welche einen mit der Ventilnadel 10 in Wirkverbindung stehenden Ventilschließkörper 14 in dichtender Anlage an einer Ventilsitzfläche 15 hält, welche an einem in das Gehäuse 3 eingeschobenen Düsenkörper 18 ausgebildet ist. Die zweite Feder 13 ist dabei zwischen dem Düsenkörper 18 und dem zweiten Flansch 11b eingespannt. Im Ausführungsbeispiel handelt es sich um ein nach außen öffnendes Brennstoffeinspritzventil 1.

Wenn an den Aktor 2 über eine nicht weiter dargestellte elektrische Zuleitung eine Spannung angelegt wird, übt der Aktor 2 durch seine Ausdehnung auf das Stellgleid 4 eine Hubbewegung aus, die sich weiter auf den Geberkolben 6 des Kopplers 5 überträgt. Der Geberkolben 6 wird in das Innere des Führungszylinders 8 gedrückt. Das Hydraulikfluid, im vorliegenden Ausführungsbeispiel Brennstoff, im Inneren des zwischen dem Geberkolben 6 und dem Nehmerkolben 7 ausgebildeten Kopplerspalts 9 ist fast nicht kompressibel.

Durch diese Inkompressibilität des Brennstoffs werden langsame Druckänderungen, welche durch Temperaturänderungen während des Betriebs der Brennkraftmaschine hervorgerufen werden, oder Längenänderungen des Gehäuses 3 durch Druck- und Temperatureinflüsse nicht auf die Ventilnadel 10 übertragen, sondern durch Verdrängung von Brennstoff aus dem Kopplerspalt 9 ausgeglichen.

Bei Erregung des Aktors 2 kommt es somit zu einem schnellen Druckanstieg, durch den sich der Nehmerkolben 7 im Führungszylinder 8 in Richtung der Ventilnadel 10 bewegt und auf diese eine Hubkraft ausübt. Durch einen zwischen dem Geberkolben 6 und dem Führungszylinder 8 bzw. zwischen dem Nehmerkolben 7 und dem Führungszylinder 8 zwangsläufig bestehenden Ringspalt 16 kann aufgrund der schnellen Ausdehnung des Aktors 2 nur eine geringe Menge Brennstoff aus dem Kopplerspalt 9 entweichen. Der Hub des Aktors 2 wird somit praktisch verlustfrei über die Flansche 11a, 11b auf die Ventilnadel 10 des Brennstoffeinspritzventils 1 übertragen, wodurch die Ventilnadel 10 in Abströmrichtung gedrückt wird und der Ventilschließkörper 14 von der Ventilsitzfläche 15 abhebt, wodurch das Brennstoffeinspritzventil 1 geöffnet wird.

Nach dem Abfallen der Spannung an dem Aktor 2 zieht dieser sich wieder zusammen, wodurch der hydraulische Koppler 5 entlastet wird. Durch die Kraft der zweiten Feder 13 kehrt die Ventilnadel 10 in ihre Ausgangslage zurück, wodurch der Ventilschließkörper 14 auf der Ventilsitzfläche 15 aufsetzt und das Brennstoffeinspritzventil 1 geschlossen wird.

Gemäß dem Stand der Technik wird die Kraft der ersten Feder 12, welche dem Erhalt des Kopplerspalts 9 dient, mittels einer Einstellscheibe eingestellt. Dieses Verfahren ist ungenau und mit einem zusätzlichen Bauteil verbunden.

Erfindungsgemäß wird daher der Düsenkörper 18 des Brennstoffeinspritzventils 1 - bei der Montage des Brennstoffeinspritzventils 1 in das Gehäuse 3 so weit eingeschoben, bis die gewünschte Federspannung der ersten Feder 12 erreicht ist. Danach wird der Düsenkörper 18 mit dem Gehäuse 3 des Brennstoffeinspritzventils 1 an der Schweißnaht 17 verschweißt. Dies hat den Vorteil, daß die Einstellgenauigkeit nicht von einem Bauteil bestimmt wird, welches aufgrund seiner geringfügigen Dicke empfindlich gegenüber Verschleiß und nachfolgenden Störungen durch eine Änderung des Hubs ist und zudem hohe Fertigungsungenauigkeiten aufweisen kann.

Die Erfindung ist nicht auf das dargestellte Ausführungsbeispiel beschränkt und beispielsweise auch für Brennstoffeinspritzventile 1 für gemischverdichtende, selbstzündende Brennkraftmaschinen anwendbar.

## Patentansprüche

1. Brennstoffeinspritzventil (1) zum direkten Einspritzen von Brennstoff in den Brennraum einer Brennkraftmaschine, mit einem piezoelektrischen oder magnetostriktiven Aktor (2), wobei über einen hydraulischen Koppler (5) ein an einer Ventilnadel (10) angeordneter Ventilschließkörper (14), der mit einer Ventilsitzfläche (15) zu einem Dichtsitz zusammenwirkt, von dem piezoelektrischen oder magnetostriktiven Aktor (2) betätigbar ist,
wobei der Koppler (5) einen Führungszylinder (8) aufweist, in welchem ein Geberkolben (6) und ein Nehmerkolben (7) geführt sind,
wobei zwischen dem Geberkolben (6) und dem Nehmerkolben (7) ein Kopplerspalt (9) ausgebildet ist, und einer ersten Feder (12), welche eine Vorspannkraft auf den Nehmerkolben (7) ausübt, und
wobei ein Düsenkörper (18) in einem Gehäuse (3) des Brennstoffeinspritzventils (1) vor seiner Fixierung so verschiebbar ist, dass durch seine Position die Kraft der ersten Feder(12) einstellbar ist,
**dadurch gekennzeichnet,**
**dass** der Nehmerkolben(7) einen ersten Flansch (11a) und die Ventilnadel (10) einen zweiten Flansch (11b) aufweist,
wobei die erste Feder (12) so zwischen dem Führungszylinder (8) und dem ersten Flansch (11a) eingespannt ist, dass der erste Flansch (11a) an dem zweiten Flansch (11b) in Anlage gehalten wird.

2. Brennstoffeinspritzventil nach Anspruch 1,
**dadurch gekennzeichnet,**
**dass** zwischen dem Düsenkörper (18) des Brennstoffeinspritzventils (1) und dem zweiten Flansch (11b) eine zweite Feder (13) so eingespannt ist, dass der Ventilschließkörper (14) ohne Betätigung des Aktors (2) an der Ventilsitzfläche (15) in Anlage gehalten wird.

3. Brennstoffeinspritzventil nach Anspruch 1 oder 2,
**dadurch gekennzeichnet,**
**dass** als Hydraulikmedium, welches den Kopplerspalt (9) füllt, der das Brennstoffeinspritzventil (1) durchströmende Brennstoff dient.

4. Brennstoffeinspritzventil nach Anspruch 1,
**dadurch gekennzeichnet,**
**dass** der Düsenkörper (18) in dem Gehäuse (3) durch eine Schweißnaht (17) fixiert ist.

## Claims

1. Fuel injection valve (1) for the direct injection of fuel into the combustion space of an internal combustion engine, with a piezoelectric or magnetostrictive actuator (2), a valve-closing body (14), which is arranged on a valve needle (10) and cooperates with a valve-seat surface (15) to form a sealing seat, being actuable by the piezoelectric or magnetostrictive actuator (2) via a hydraulic coupler (5), the coupler (5) having a guide cylinder (8) in which a master piston (6) and a slave piston (7) are guided, a coupler gap (9) being formed between the master piston (6) and the slave piston (7), and with a first spring (12) which exerts a prestressing force on the slave piston (7), and a nozzle body (18), before being fixed, being displaceable in a housing (3) of the fuel injection valve (1) such that the force of the first spring (12) can be set by means of the position of the said nozzle body, **characterized in that** the slave piston (7) has a first flange (11a) and the valve needle (10) has a second flange (11b), the first spring (12) being tension-mounted between the guide cylinder (8) and the first flange (11a) such that the first flange (11a) is held in bearing contact against the second flange (11b).

2. Fuel injection valve according to Claim 1, **characterized in that** a second spring (13) is tension-mounted between the nozzle body (18) of the fuel infection valve (1) and the second flange (11b) such that the valve-closing body (14) is held in bearing contact against the valve-seat surface (15) without the actuation of the actuator (2).

3. Fuel injection valve according to Claim 1 or 2, **characterized in that** the fuel flowing through the fuel injection valve (1) serves as a hydraulic medium which fills the coupler gap (9).

4. Fuel injection valve according to Claim 1, **characterized in that** the nozzle body (18) is fixed in the housing (3) by means of a weld seam (17).

## Revendications

1. Injecteur de carburant (1) pour l'injection directe de carburant dans la chambre de combustion d'un moteur à combustion interne, comportant un actionneur (2) piézoélectrique ou magnétostrictif, dans lequel
- un obturateur de soupape (14) qui, à l'extrémité d'une aiguille de soupape (10), coopère avec une surface de siège de soupape (15) pour former un siège d'étanchéité, peut être actionné par l'actionneur (2) piézoélectrique ou magnétostrictif via un coupleur hydraulique (5),
- le coupleur (5) présente un cylindre de guidage (8) guidant un piston entraîneur (6) et un piston entraîné (7),
- un espace de coupleur (9) est constitué entre le piston entraîneur (6) et le piston entraîné (7) et un premier ressort (12) exerce une force de précontrainte sur le piston entraîné (7), et
- un corps de buse (18) est poussé dans un carter (3) de l'injecteur de carburant (1) avant d'être fixer, dans une position permettant de régler la force du premier ressort (12),
**caractérisé en ce que**
le piston entraîné (7) présente une première bride (11a) et l'aiguille de soupape (10) une seconde bride (11b), le premier ressort (12) étant monté entre le cylindre de guidage (8) et la première bride (11a) de telle manière que la première bride (11a) soit maintenue en appui sur la seconde bride (11b).

2. Injecteur de carburant selon la revendication 1,
**caractérisé en ce qu'**
un second ressort (13) est monté entre le corps de buse (18) de l'injecteur de carburant (1) et la seconde bride (11b) de telle manière que l'obturateur de soupape (14), sans actionnement de l'actionneur (2), soit maintenu en appui contre la surface de siège de soupape (15).

3. Injecteur de carburant selon la revendication 1 ou 2,
**caractérisé en ce que**
le fluide hydraulique remplissant l'espace de coupleur (9) est constitué par le carburant qui traverse l'injecteur de carburant (1).

4. Injecteur de carburant selon la revendication 1,
**caractérisé en ce que**
le corps de buse (18) est fixé dans le carter (3) par une ligne de soudure (17).
